# EUROPEAN PATENT APPLICATION

(11) **EP 2 497 746 A1**
(43) Date of publication of application: **12.09.2012**
(21) Application number: 10826827.7
(22) Date of filing: 28.10.2010
(51) Int. Cl.: C01B 31/36, C04B 35/626

(54) **SPHERICAL SILICON CARBIDE POWDER, PROCESS FOR PRODUCTION OF SAME, AND PROCESS FOR PRODUCTION OF SILICON CARBIDE CERAMIC MOLDED ARTICLE UTILIZING SAME**

(30) Priority: 02.11.2009 JP 2009252213
(71) Applicant: Shin-Etsu Chemical Co., Ltd., Tokyo 100-0004 (JP)
(72) Inventor: AOKI, Yoshitaka, Annaka-shi Gunma 379-0224 (JP)
(74) Representative: Hallybone, Huw George
(86) International application number: PCT/JP2010/069212
(87) International publication number: WO 2011/052695

(57) **Abstract**

A high-purity spherical silicon carbide powder is obtained by thermally decomposing a spherical cured silicone powder under a non-oxidizing atmosphere.

## Description

### Technical Field

The present invention relates to a spherical silicon carbide powder and a method of producing a silicon carbide ceramic molded product using the powder.

### Background Art

Silicon carbide ceramics are chemically stable at both normal temperatures and high temperatures, and also exhibit excellent mechanical strength at high temperature, and they are therefore used as high-temperature materials. In recent years, in the field of semiconductor production, high-purity silicon carbide ceramic sintered compacts having excellent heat resistance and creep resistance have started to be used as boards or process tubes or the like within steps for conducting heat treatments of semiconductor wafers, or conducting thermal diffusion of trace elements within semiconductor wafers.

These silicon carbide ceramic sintered compacts are typically produced by sintering a silicon carbide powder, and in order to increase the denseness of the resulting sintered compact, a spherical granulated powder is normally used.

Examples of methods of obtaining a spherical silicon carbide powder include a method that uses a spray dryer (for example, see Patent Document 1), and a method that involves melting a polycarbosilane, converting the polycarbosilane to a non-melting form, and then performing a thermal decomposition (Patent Document 1). However, both of these methods require special equipment, and suffer from a complex production process.

If an impurity element that is detrimental to semiconductors is incorporated within the silicon carbide powder used in the sintering process for producing a silicon carbide ceramic sintered compact, then the resulting sintered compact will also contain the impurity element, meaning that if, for example, a container made from the sintered compact is used during the heating of a semiconductor wafer, then the impurity element may penetrate into and contaminate the wafer. Accordingly, in those cases where a silicon carbide ceramic sintered compact is used in this type of application, it is desirable that the raw material silicon carbide powder is as pure as possible.

### Prior Art Documents

### Patent Documents

Patent Document 1: JP 2003-063874 A
Patent Document 2: JP 2007-112683 A

### Summary of the Invention

### Problems Invention Aims to Solve

An object of the present invention is to address the problems associated with the conventional technology described above, and provide a spherical silicon carbide powder that can be obtained relatively easily, a method of producing the powder, and a method of producing a silicon carbide ceramic molded product using the silicon carbide powder.

### Means for Solution of the Problems

As a result of intensive investigation aimed at achieving the above object, the inventors of the present invention discovered that the object could be achieved by thermally decomposing a spherical cured silicone powder under a non-oxidizing atmosphere.

In other words, a first aspect of the present invention provides a spherical silicon carbide powder obtained by thermally decomposing a spherical cured silicone powder under a non-oxidizing atmosphere.

A second aspect of the present invention provides a method of producing a spherical silicon carbide powder, the method comprising thermally decomposing a spherical cured silicone powder under a non-oxidizing atmosphere.

A third aspect of the present invention provides a method of producing a silicon carbide molded product, the method comprising:
molding a curable silicone composition comprising the aforementioned spherical silicon carbide powder into a desired shape, and then curing the composition to obtain a silicone cured molded product having a desired shape, and
subsequently thermally decomposing the silicone portion of the silicone cured molded product under a non-oxidizing atmosphere.

### Effects of the Invention

According to the present invention, because the starting raw material is a spherical cured silicone powder, the desired spherical silicon carbide powder can be obtained easily by simply thermally decomposing the spherical cured silicone powder.

Because the spherical cured silicone powder can be obtained easily from a curable silicone composition, enhancing the purity at the curable silicone composition stage means that a high-purity spherical silicon carbide powder can be provided.

Further, according to the method of producing a silicon carbide molded product, because a comparatively large amount of the aforementioned spherical silicon carbide powder can be mixed with the curable silicone composition, a denser silicon carbide molded product can be produced with relative ease.

Furthermore, by selecting a high-purity composition as the curable silicone composition that functions as the base material, and selecting the aforementioned high-purity powder as the spherical silicon carbide powder, a high-purity silicon carbide molded product can be obtained relatively easily.

### Brief Description of the Drawings

[Fig. 1] A schematic diagram of an attachment jig for a circular cylindrical porous glass film used in a silicone composition emulsification device used in an example 1 of the present invention.
[Fig. 2] A diagram describing the assembly of the emulsification device.
[Fig. 3] A diagram describing an emulsification process using the emulsification device.

### Embodiments of Carrying Out the Invention

A more detailed description of the present invention is presented below. In this description, "room temperature" refers to the ambient temperature, which can typically change within a range from 10 to 35°C.

### - Spherical Cured Silicone Powder -

The spherical cured silicone powder used as the starting raw material in the method of the present invention can be produced by molding and curing a curable silicone composition.

When the spherical cured silicone powder is converted to a spherical silicon carbide powder by the thermal decomposition described below, the powder shrinks by approximately 10 to 50% by volume, and therefore the average particle size of the spherical cured silicone powder is preferably within a range from 0.1 to 100 µm, and more preferably from 0.5 to 20 µm. In this description, the average particle size of particles refers to the volume average particle size, which is typically measured using a laser diffraction and scattering particle measurement device.

There are no particular limitations on the type of curable silicone composition used in the production method of the present invention, and any curable silicone composition of any curing type can be used. Specific examples thereof include organic peroxide-curable, radiation-curable, addition-curable and condensation-curable silicone compositions. Organic peroxide-curable and radiation-curable silicone compositions are advantageous in terms of achieving a higher degree of purity for the obtained silicon carbide powder, and the total amount of impurity elements within the obtained silicon carbide powder can be suppressed to not more than 1 ppm, preferably not more than 0.5 ppm, and more preferably 0.1 ppm or less. Examples of the impurity elements include Fe, Cr, Ni, Al, Ti, Cu, Na, Zn, Ca, Zr, Mg and B, and the total amount of all these impurity elements can be suppressed in the manner described above.

Examples of organic peroxide-curable silicone compositions include silicone compositions that undergo curing via a radical polymerization, in the presence of an organic peroxide, of a linear organopolysiloxane having alkenyl groups such as vinyl groups at a molecular chain terminal (either at one terminal or at both terminals), at non-terminal positions within the molecular chain, or at both of these positions.

Examples of radiation-curable silicone compositions include ultraviolet light-curable silicone compositions and electron beam-curable silicone compositions.

Examples of ultraviolet light-curable silicone compositions include silicone compositions that undergo curing as a result of the energy of ultraviolet light having a wavelength of 200 to 400 nm. In this case, there are no particular limitations on the curing mechanism. Specific examples of these compositions include acrylic silicone-based silicone compositions comprising an organopolysiloxane containing acryloyl groups or methacryloyl groups, and a photopolymerization initiator, mercapto-vinyl addition polymerization-based silicone compositions comprising a mercapto group-containing organopolysiloxane, an organopolysiloxane that contains alkenyl groups such as vinyl groups, and a photopolymerization initiator, addition reaction-based silicone compositions that use the same platinum group metal-based catalysts as heat-curable, addition reaction-type compositions, and cationic polymerization-based silicone compositions comprising an organopolysiloxane containing epoxy groups, and an onium salt catalyst, and any of these compositions can be used as an ultraviolet light-curable silicone composition.

Examples of electron beam-curable silicone compositions that can be used include any of the silicone compositions that are cured by a radical polymerization that is initiated by irradiating an organopolysiloxane containing radical polymerizable groups with an electron beam.

Examples of addition-curable silicone compositions include silicone compositions that are cured by reacting an aforementioned linear organopolysiloxane having alkenyl groups with an organohydrogenpolysiloxane (via a hydrosilylation addition reaction) in the presence of a platinum group metal-based catalyst.

Examples of condensation-curable silicone compositions include silicone compositions that are cured by conducting a reaction between an organopolysiloxane with both terminals blocked with silanol groups, and an organohydrogenpolysiloxane or a hydrolyzable silane such as a tetraalkoxysilane or an organotrialkoxysilane and/or a partial hydrolysis-condensation product thereof, in the presence of a condensation reaction catalyst such as an organotin-based catalyst, or silicone compositions that are cured by reacting an organopolysiloxane with both terminals blocked with trialkoxy groups, dialkoxyorgano groups, trialkoxysiloxyethyl groups or dialkoxyorganosiloxyethyl groups, in the presence of a condensation reaction catalyst such as an organotin-based catalyst.

However, from the viewpoint of avoiding, as far as possible, the incorporation of impurity elements, radiation-curable silicone compositions and organic peroxide-curable silicone compositions are preferred.

Each of the above curable silicone compositions is described below in detail.

### - Organic Peroxide-Curable Silicone Compositions

Specific examples of organic peroxide-curable silicone compositions include compositions comprising:
(a) an organopolysiloxane containing at least two alkenyl groups bonded to silicon atoms,
(b) an organic peroxide, and, as an optional component:
(c) an organohydrogenpolysiloxane containing at least two hydrogen atoms bonded to silicon atoms (namely, SiH groups), in an amount that provides 0.1 to 2 mols of hydrogen atoms bonded to silicon atoms within the component (c) per 1 mol of alkenyl groups within the entire curable silicone composition.

### -- Component (a)

The organopolysiloxane of the component (a) is the base polymer of the organic peroxide-curable silicone composition. There are no particular limitations on the polymerization degree of the organopolysiloxane of the component (a), and organopolysiloxanes that are liquid at 25°C through to natural rubber-type organopolysiloxanes can be used as the component (a), but the average polymerization degree is preferably within a range from 50 to 20,000, more preferably from 100 to 10,000, and still more preferably from 100 to approximately 2,000. Further, from the viewpoint of ease of availability of the raw material, the organopolysiloxane of the component (a) is preferably basically a linear structure with no branching, in which the molecular chain is composed of repeating diorganosiloxane units (R¹₂SiO_{2/2} units) and both molecular chain terminals are blocked with triorganosiloxy groups (R¹₃SiO_{1/2}) or hydroxydiorganosiloxy groups ((HO)R¹₂SiO_{1/2} units), or a cyclic structure with no branching in which the molecular chain is composed of repeating diorganosiloxane units, although the structure may partially include some branched structures such as trifunctional siloxane units or SiO₂ units. In the above description, R¹ is as defined below within the description of formula (1).

Examples of organopolysiloxanes that can be used as the component (a) include organopolysiloxanes having at least two alkenyl groups within each molecule, as represented by an average composition formula (1) shown below:

R¹ₐSiO_{(4-a)/2} (1)

wherein R¹ represents identical or different, unsubstituted or substituted monovalent hydrocarbon groups of 1 to 10 carbon atoms, and preferably 1 to 8 carbon atoms, 50 to 99 mol% of the R¹ groups are alkenyl groups, and a represents a positive number within a range from 1.5 to 2.8, preferably from 1.8 to 2.5, and more preferably from 1.95 to 2.05.

Specific examples of R¹ include alkyl groups such as a methyl group, ethyl group, propyl group, butyl group, pentyl group and hexyl group; aryl groups such as a phenyl group, tolyl group, xylyl group and naphthyl group; cycloalkyl groups such as a cyclopentyl group and cyclohexyl group; alkenyl groups such as a vinyl group, allyl group, propenyl group, isopropenyl group and butenyl group; and groups in which some or all of the hydrogen atoms within one of the above hydrocarbon groups have each been substituted with a halogen atom such as a fluorine atom, bromine atom or chlorine atom, or a cyano group or the like, including a chloromethyl group, chloropropyl group, bromoethyl group, trifluoropropyl group and cyanoethyl group, although from the viewpoint of achieving high purity, the R¹ groups are preferably composed solely of hydrocarbon groups.

In this case, at least two of the R¹ groups represent alkenyl groups (and in particular, alkenyl groups that preferably contain from 2 to 8 carbon atoms, and more preferably from 2 to 6 carbon atoms). The alkenyl group content among the total of all the organic groups bonded to silicon atoms (that is, among all the unsubstituted and substituted monovalent hydrocarbon groups represented by R¹ within the above average composition formula (1)) is preferably within a range from 50 to 99 mol%, and more preferably from 75 to 95 mol%. In those cases where the organopolysiloxane of the component (a) has a linear structure, these alkenyl groups may be bonded solely to silicon atoms at the molecular chain terminals, solely to non-terminal silicon atoms within the molecular chain, or to both these types of silicon atoms.

### -- Component (b)

The component (b) is an organic peroxide that is used as a catalyst for accelerating the cross-linking reaction of the component (a) in the organic peroxide-curable organopolysiloxane composition. Any conventional organic peroxide can be used as the component (b), provided it is capable of accelerating the cross-linking reaction of the component (a). Specific examples of the component (b) include benzoyl peroxide, 2,4-dichlorobenzoyl peroxide, p-methylbenzoyl peroxide, o-methylbenzoyl peroxide, 2,4-dicumyl peroxide, 2,5-dimethyl-bis(2,5-t-butylperoxy)hexane, di-t-butyl peroxide, t-butyl perbenzoate and 1,1-bis(t-butylperoxycarboxy)hexane, although this is not an exhaustive list.

The amount added of the component (b) must be an amount that is effective as a catalyst for accelerating the cross-linking reaction of the component (a). This amount is preferably within a range from 0.1 to 10 parts by mass, and more preferably from 0.2 to 2 parts by mass, per 100 parts by mass of the component (a). If the amount added of the component (b) is less than 0.1 parts by mass per 100 parts by mass of the component (a), then the time required for curing lengthens, which is economically undesirable. Further, if the amount added exceeds 10 parts by mass per 100 parts by mass of the component (a), then foaming caused by the component (b) tends to occur, and the strength and heat resistance of the cured reaction product tend to be adversely affected.

### -- Component (c)

The organohydrogenpolysiloxane of the component (c), which is an optional component, contains at least two (typically from 2 to 200), and preferably three or more (typically from 3 to 100) hydrogen atoms bonded to silicon atoms (SiH groups). Even when only the component (a) is used, curing can be achieved by adding the component (b) and heating, but by also adding the component (c), because the reaction with the component (a) proceeds readily, curing can be performed at a lower temperature and within a shorter period of time than the case where only the component (a) is used. There are no particular limitations on the molecular structure of the component (c), and conventionally produced linear, cyclic, branched, or three dimensional network (resin-like) organohydrogenpolysiloxanes can be used as the component (c). In those cases where the component (c) has a linear structure, the SiH groups may be bonded solely to silicon atoms at the molecular chain terminals or solely to non-terminal silicon atoms within the molecular chain, or may also be bonded to both these types of silicon atoms. Furthermore, the number of silicon atoms within each molecule (or the polymerization degree) is typically within a range from 2 to 300, and is preferably from 4 to approximately 150. An organohydrogenpolysiloxane that is liquid at room temperature (25°C) can be used particularly favorably as the component (c).

Examples of the component (c) include organohydrogenpolysiloxanes represented by an average composition formula (2) shown below:

R ²_{b}H_{c}SiO_{(4-b-c)/2} (2)

wherein R² represents identical or different, unsubstituted or substituted monovalent hydrocarbon groups containing no aliphatic unsaturated bonds and containing 1 to 10 carbon atoms, and preferably 1 to 8 carbon atoms, and b and c represent positive numbers that preferably satisfy 0.7≤b≤2.1, 0.001≤c≤1.0 and 0.8≤b+c≤3.0, and more preferably satisfy 1.0≤b≤2.0, 0.01≤c≤1.0 and 1.5≤b+c≤2.5.
Examples of R² include the same groups as those described above for R¹ within the above average composition formula (1) (but excluding the alkenyl groups).

Specific examples of organohydrogenpolysiloxanes represented by the above average composition formula (2) include 1,1,3,3-tetramethyldisiloxane, 1,3,5,7-tetramethylcyclotetrasiloxane, tris(hydrogendimethylsiloxy)methylsilane, tris(hydrogendimethylsiloxy)phenylsilane, methylhydrogencyclopolysiloxane, cyclic copolymers of methylhydrogensiloxane and dimethylsiloxane, methylhydrogenpolysiloxane with both terminals blocked with trimethylsiloxy groups, copolymers of methylhydrogensiloxane and dimethylsiloxane with both terminals blocked with trimethylsiloxy groups, dimethylpolysiloxane with both terminals blocked with methylhydrogensiloxy groups, copolymers of methylhydrogensiloxane and dimethylsiloxane with both terminals blocked with methylhydrogensiloxy groups, copolymers of methylhydrogensiloxane and diphenylsiloxane with both terminals blocked with trimethylsiloxy groups, copolymers of methylhydrogensiloxane, diphenylsiloxane and dimethylsiloxane with both terminals blocked with trimethylsiloxy groups, copolymers of methylhydrogensiloxane, methylphenylsiloxane and dimethylsiloxane with both terminals blocked with trimethylsiloxy groups, copolymers of methylhydrogensiloxane, diphenylsiloxane and dimethylsiloxane with both terminals blocked with methylhydrogensiloxy groups, copolymers of methylhydrogensiloxane, methylphenylsiloxane and dimethylsiloxane with both terminals blocked with methylhydrogensiloxy groups, copolymers composed of (CH₃)₂HSiO_{1/2} units, (CH₃)₂SiO_{2/2} units and SiO_{4/2} units, copolymers composed of (CH₃)₂HSiO_{1/2} units and SiO_{4/2} units, and copolymers composed of (CH₃)₂HSiO_{1/2} units, SiO_{4/2} units, and (C₆H₆)₃SiO_{1/2} units.

The amount added of the component (c) is preferably within a range from 0 to 100 parts by mass, and more preferably from 0 to 50 parts by mass, per 100 parts by mass of the component (a). If the amount added of the component (c) exceeds 100 parts by mass per 100 parts by mass of the component (a), then foaming caused by the component (c) tends to occur, and the strength and heat resistance of the cured reaction product tend to be adversely affected.

### - Ultraviolet Light-Curable Silicone Compositions

Specific examples of ultraviolet light-curable silicone compositions include compositions comprising:
(d) an ultraviolet light-reactive organopolysiloxane, and
(e) a photopolymerization initiator.

### -- Component (d)

The ultraviolet light-reactive organopolysiloxane of the component (d) typically functions as the base polymer in the ultraviolet light-curable silicone composition. Although there are no particular limitations on the component (d), the component (d) is preferably an organopolysiloxane containing at least two, more preferably from 2 to 20, and most preferably from 2 to 10, ultraviolet light-reactive groups within each molecule. The plurality of ultraviolet light-reactive groups that exist within this organopolysiloxane may be the same or different.

From the viewpoint of ease of availability of the raw material, the organopolysiloxane of the component (d) is preferably basically either a linear structure with no branching, in which the molecular chain (the main chain) is composed of repeating diorganosiloxane units (R¹₂SiO_{2/2} units), and both molecular chain terminals are blocked with triorganosiloxy groups (R¹₃SiO_{1/2}), or a cyclic structure with no branching in which the molecular chain is composed of repeating diorganosiloxane units, although the structure may partially include some branched structures such as trifunctional siloxane units or SiO₂ units. In the above description, R¹ is the same as defined above in relation to formula (1). In those cases where the organopolysiloxane of the component (d) has a linear structure, the ultraviolet light-reactive groups may exist solely at the molecular chain terminals or solely at non-terminal positions within the molecular chain, or may also exist at both these positions, although structures containing ultraviolet light-reactive groups at least at both molecular chain terminals are preferred.

Examples of the ultraviolet light-reactive groups include alkenyl groups such as a vinyl group, allyl group and propenyl group; alkenyloxy groups such as a vinyloxy group, allyloxy group, propenyloxy group and isopropenyloxy group; aliphatic unsaturated groups other than alkenyl groups, such as an acryloyl group and methacryloyl group; as well as an epoxy group and hydrosilyl group, and of these, an acryloyl group, methacryloyl group, mercapto group, epoxy group or hydrosilyl group is preferred, and an acryloyl group or methacryloyl group is particularly desirable.

Although there are no particular limitations on the viscosity of the organopolysiloxane, the viscosity at 25°C is preferably within a range from 100 to 1,000,000 mPa·s, more preferably from 200 to 500,000 mPa·s, and still more preferably from 200 to 100,000 mPa·s.

Examples of preferred forms of the component (d) include organopolysiloxanes containing at least two ultraviolet light-reactive groups, represented by either a general formula (3a) shown below: 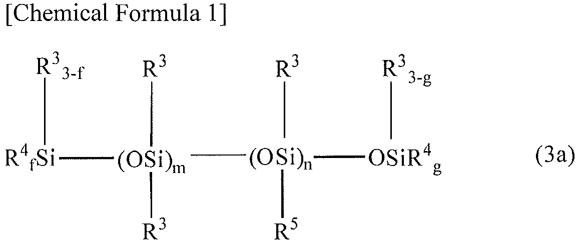 wherein R³ represents identical or different, unsubstituted or substituted monovalent hydrocarbon groups that contain no ultraviolet light-reactive groups, R⁴ represents identical or different groups that contain an ultraviolet light-reactive group, R⁵ represents identical or different groups that contain an ultraviolet light-reactive group, m represents an integer of 5 to 1,000, n represents an integer of 0 to 100, f represents an integer of 0 to 3, and g represents an integer of 0 to 3, provided that f+g+n≥2,
or a general formula (3b) shown below: 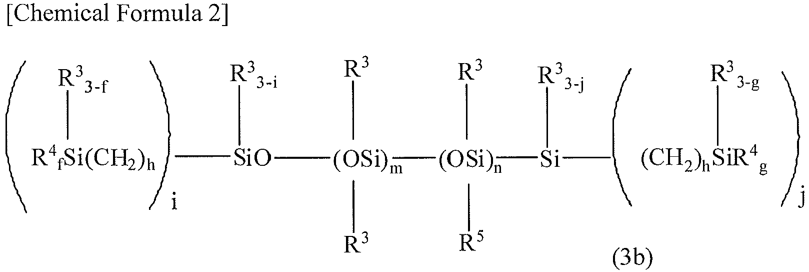 wherein R³, R⁴, R⁵, m, n, f and g are as defined above for the general formula (3a), h represents an integer of 2 to 4, and i and j each represents an integer of 1 to 3, provided that fi+gj+n≥2.

In the above general formulas (3a) and (3b), R³ represents identical or different, unsubstituted or substituted monovalent hydrocarbon groups that contain no ultraviolet light-reactive groups and preferably contain from 1 to 20 carbon atoms, more preferably from 1 to 10 carbon atoms, and most preferably from 1 to 8 carbon atoms. Examples of the monovalent hydrocarbon groups represented by R³ include alkyl groups such as a methyl group, ethyl group, propyl group, butyl group, pentyl group and hexyl group; aryl groups such as a phenyl group, tolyl group, xylyl group and naphthyl group; cycloalkyl groups such as a cyclopentyl group, cyclohexyl group and cyclopentyl group; aralkyl groups such as a benzyl group and phenylethyl group; and groups in which some or all of the hydrogen atoms within one of the above hydrocarbon groups have each been substituted with a halogen atom, cyano group or carboxyl group or the like, including a chloromethyl group, chloropropyl group, bromoethyl group, trifluoropropyl group, cyanoethyl group and 3-cyanopropyl group, and of these, a methyl group or phenyl group is preferred, and a methyl group is particularly desirable. Furthermore, the monovalent hydrocarbon group represented by R³ may also include one or more sulfonyl groups, ether linkages (-O-) and/or carbonyl groups or the like within the group structure.

In the above general formulas (3a) and (3b), examples of the ultraviolet light-reactive groups contained within the groups R⁴ and R⁵ include alkenyl groups such as a vinyl group, allyl group and propenyl group; alkenyloxy groups such as a vinyloxy group, allyloxy group, propenyloxy group and isopropenyloxy group; aliphatic unsaturated groups other than alkenyl groups, such as an acryloyl group and methacryloyl group; as well as a mercapto group, epoxy group and hydrosilyl group, and of these, an acryloyl group, methacryloyl group, epoxy group or hydrosilyl group is preferred, and an acryloyl group or methacryloyl group is particularly desirable. Accordingly, the groups comprising an ultraviolet light-reactive group represented by R⁴ and R⁵ are monovalent groups that contain any of the above ultraviolet light-reactive groups, and specific examples of R⁴ and R⁵ include a vinyl group, allyl group, 3-glycidoxypropyl group, 2-(3,4-epoxycyclohexyl)ethyl group, 3-methacryloyloxypropyl group, 3-acryloyloxypropyl group, 3-mercaptopropyl group, 2-{bis(2-methacryloyloxyethoxy)methylsilyl} ethyl group, 2-{bis(2-acryloyloxyethoxy)methylsilyl} ethyl group, 2-{(2-acryloyloxyethoxy)dimethylsilyl}ethyl group, 2-{bis(1,3-dimethacryloyloxy-2-propoxy)methylsilyl}ethyl group, 2-{(1,3-dimethacryloyloxy-2-propoxy)dimethylsilyl}ethyl group, 2-{bis(1-acryloyloxy-3-methacryloyloxy-2-propoxy)methylsilyl}ethyl group and 2-{bis(1-acryloyloxy-3-methacryloyloxy-2-propoxy)dimethylsilyl}ethyl group, and examples of preferred groups include a 3-methacryloyloxypropyl group, 3-acryloyloxypropyl group, 2-{bis(2-methacryloyloxyethoxy)methylsilyl}ethyl group, 2-{bis(2-acryloyloxyethoxy)methylsilyl}ethyl group, 2-{(2-acryloyloxyethoxy)dimethylsilyl}ethyl group, 2-{(1,3-dimethacryloyloxy-2-propoxy)dimethylsilyl} ethyl group, 2-{bis(1-acryloyloxy-3-methacryloyloxy-2-propoxy)methylsilyl}ethyl group and 2-{bis(1-acryloyloxy-3-methacryloyloxy-2-propoxy)dimethylsilyl}ethyl group. R⁴ and R⁵ may be either the same or different, and individual R⁴ and R⁵ groups may be the same as, or different from, other R⁴ and R⁵ groups.

In the above general formulas (3a) and (3b), m is typically an integer of 5 to 1,000, preferably an integer of 10 to 800, and more preferably an integer of 50 to 500. n is typically an integer of 0 to 100, preferably an integer of 0 to 50, and more preferably an integer of 0 to 20. f is an integer of 0 to 3, preferably an integer of 0 to 2, and more preferably 1 or 2. g is an integer of 0 to 3, preferably an integer of 0 to 2, and more preferably 1 or 2. In the above general formula (3b), h is typically an integer of 2 to 4, and is preferably 2 or 3. Each of i and j represents an integer of 1 to 3, and preferably an integer of 1 or 2. Moreover, as described above, the organopolysiloxanes represented by the above general formulas (3a) and (3b) contain at least two of the above ultraviolet light-reactive groups, and consequently f+g+n≥2 in the formula (3a), and fi+gj+n≥2 in the formula (3b).

Specific examples of organopolysiloxanes represented by the above formulas (3a) and (3b) include the compounds shown below.

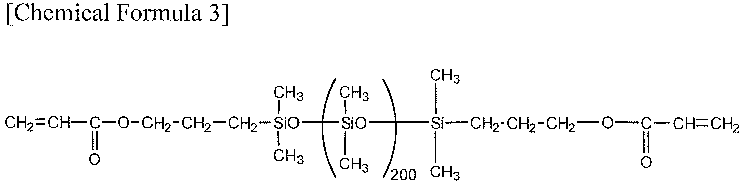

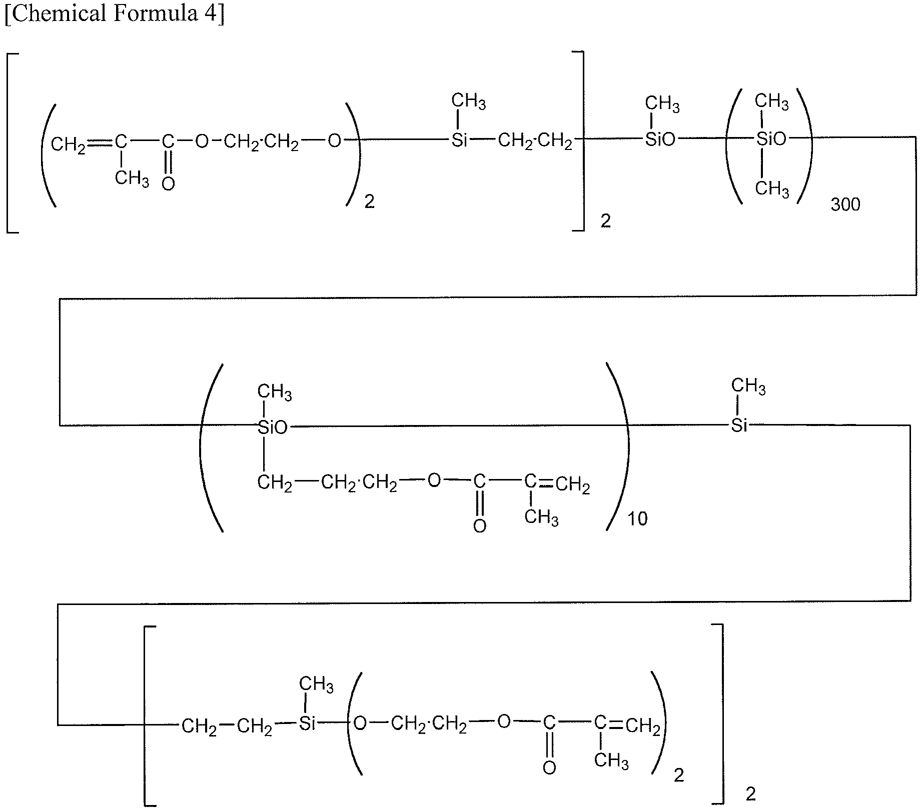

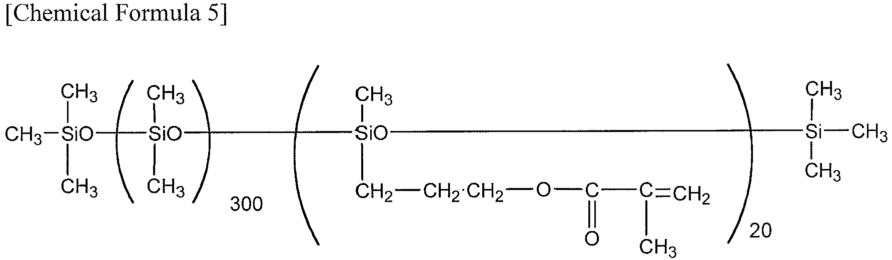

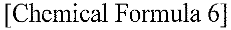

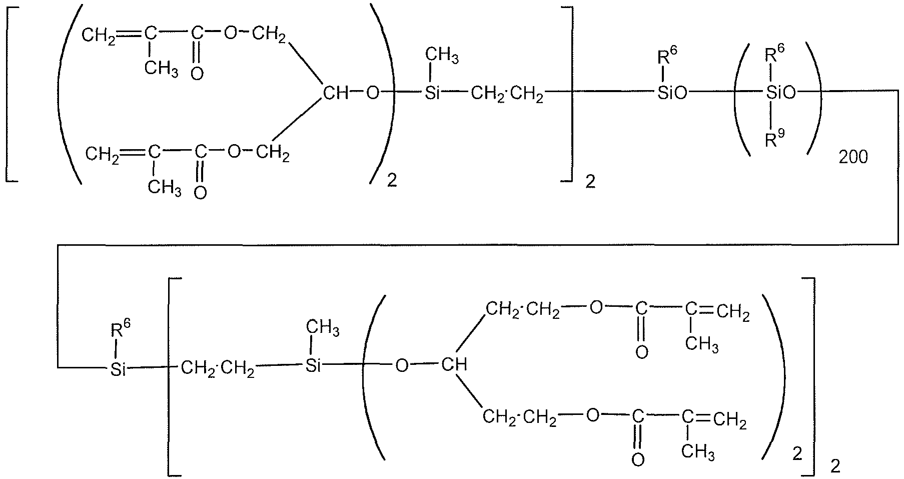

In the above formulas, the R⁶ groups are 90% methyl groups and 10% phenyl groups.

### -- Component (e)

The photopolymerization initiator of the component (e) has the effect of accelerating the photopolymerization of the ultraviolet light-reactive groups within the above component (d). There are no particular limitations on the component (e), and specific examples thereof include acetophenone, propiophenone, benzophenone, xanthol, fluorein, benzaldehyde, anthraquinone, triphenylamine, 4-methylacetophenone, 3-pentylacetophenone, 4-methoxyacetophenone, 3-bromoacetophenone, 4-allylacetophenone, p-diacetylbenzene, 3-methoxybenzophenone, 4-methylbenzophenone, 4-chlorobenzophenone, 4,4'-dimethoxybenzophenone, 4-chloro-4'-benzylbenzophenone, 3-chloroxanthone, 3,9-dichloroxanthone, 3-chloro-8-nonylxanthone, benzoin, benzoin methyl ether, benzoin butyl ether, bis(4-dimethylaminophenyl) ketone, benzyl methoxy acetal, 2-chlorothioxanthone, diethylacetophenone, 1-hydroxychlorophenyl ketone, 1-hydroxycyclohexyl phenyl ketone, 2-methyl-(4-(methylthio)phenyl)-2-morpholino-1-propane, 2,2-dimethoxy-2-phenylacetophenone, diethoxyacetophenone, and 2-hydroxy-2-methyl-1-phenylpropan-1-one. From the viewpoint of ensuring high purity, benzophenone, 4-methoxyacetophenone, 4-methylbenzophenone, diethoxyacetophenone, 1-hydroxycyclohexyl phenyl ketone and 2-hydroxy-2-methyl-1-phenylpropan-1-one are preferred, and diethoxyacetophenone, 1-hydroxycyclohexyl phenyl ketone and 2-hydroxy-2-methyl-1-phenylpropan-1-one are particularly desirable. Any one of these photopolymerization initiators may be used alone, or two or more different initiators may be used in combination.

Although there are no particular limitations on the amount added of the component (e), the amount is preferably within a range from 0.01 to 10 parts by mass, more preferably from 0.1 to 3 parts by mass, and still more preferably from 0.5 to 3 parts by mass, per 100 parts by mass of the component (d). Provided the amount added falls within the above range, curing of the silicone composition can be more readily controlled.

### - Addition-Curable Silicone Compositions

Specific examples of addition-curable silicone compositions include compositions comprising:
(f) an organopolysiloxane containing at least two alkenyl groups bonded to silicon atoms,
(g) an organohydrogenpolysiloxane containing at least two hydrogen atoms bonded to silicon atoms (namely, SiH groups), in an amount that provides 0.1 to 5 mols of hydrogen atoms bonded to silicon atoms within the component (g) per 1 mol of alkenyl groups within the entire curable silicone composition, and
(h) an effective amount of a platinum group metal-based catalyst.

### -- Component (f)

The organopolysiloxane of the component (f) is the base polymer of the addition-curable silicone composition, and contains at least two alkenyl groups bonded to silicon atoms. Conventional organopolysiloxanes can be used as the component (f). The weight-average molecular weight of the organopolysiloxane of the component (f), measured by gel permeation chromatography (hereinafter abbreviated as GPC) and referenced against polystyrene standards, is preferably within a range from approximately 3,000 to 300,000. Moreover, the viscosity at 25°C of the organopolysiloxane of the component (f) is preferably within a range from 100 to 1,000,000 mPa·s, and is more preferably from approximately 1,000 to 100,000 mPa·s. If the viscosity is 100 mPa·s or less, then the thread-forming ability of the composition is poor, and narrowing the diameter of fibers becomes difficult, whereas if the viscosity is 1,000,000 mPa·s or greater, then handling becomes difficult. From the viewpoint of ease of availability of the raw material, the organopolysiloxane of the component (f) is basically either a linear structure with no branching, in which the molecular chain (the main chain) is composed of repeating diorganosiloxane units (R⁷₂SiO_{2/2} units), and both molecular chain terminals are blocked with triorganosiloxy groups (R⁷₃SiO_{1/2}), or a cyclic structure with no branching in which the molecular chain is composed of repeating diorganosiloxane units, although the structure may partially include some branched structures including R⁷SiO_{3/2} units and/or SiO_{4/2} units. In the above description, R⁷ is the same as defined below within the description of formula (4).

Examples of organopolysiloxanes that can be used as the component (f) include organopolysiloxanes having at least two alkenyl groups within each molecule, as represented by an average composition formula (4) shown below:

R⁷₁SiO_{(4-1)/2} (4)

wherein R⁷ represents identical or different, unsubstituted or substituted monovalent hydrocarbon groups of 1 to 10 carbon atoms, and preferably 1 to 8 carbon atoms, and 1 represents a positive number that is preferably within a range from 1.5 to 2.8, more preferably from 1.8 to 2.5, and still more preferably from 1.95 to 2.05. Examples of R⁷ include the same groups as those described above for R¹ in the average composition formula (1).

In this case, at least two of the R⁷ groups represent alkenyl groups (and in particular, alkenyl groups that preferably contain from 2 to 8 carbon atoms, and even more preferably from 2 to 6 carbon atoms). The alkenyl group content among the total of all the organic groups bonded to silicon atoms (that is, among all the unsubstituted and substituted monovalent hydrocarbon groups represented by R⁷ within the above average composition formula (4)) is preferably within a range from 50 to 99 mol%, and more preferably from 75 to 95 mol%. In those cases where the organopolysiloxane of the component (f) has a linear structure, these alkenyl groups may be bonded solely to silicon atoms at the molecular chain terminals or solely to non-terminal silicon atoms within the molecular chain, or may also be bonded to both these types of silicon atoms, but from the viewpoints of the composition curing rate and the physical properties of the resulting cured product and the like, at least one alkenyl group is preferably bonded to a silicon atom at a molecular chain terminal.

### -- Component (g)

The organohydrogenpolysiloxane of the component (g) contains at least two (typically from 2 to 200), and preferably three or more (typically from 3 to 100) hydrogen atoms bonded to silicon atoms (SiH groups). The component (g) reacts with the component (f) and functions as a cross-linking agent. There are no particular limitations on the molecular structure of the component (g), and conventionally produced linear, cyclic, branched, or three dimensional network (resin-like) organohydrogenpolysiloxanes can be used as the component (b). In those cases where the component (g) has a linear structure, the SiH groups may be bonded solely to silicon atoms at the molecular chain terminals or solely to non-terminal silicon atoms within the molecular chain, or may also be bonded to both these types of silicon atoms. Furthermore, the number of silicon atoms within each molecule (or the polymerization degree) is typically within a range from 2 to 300, and is preferably from 4 to approximately 150. An organohydrogenpolysiloxane that is liquid at room temperature (25°C) can be used particularly favorably as the component (g).

Examples of the component (g) include organohydrogenpolysiloxanes represented by an average composition formula (5) shown below.

R⁸ₚH_{q}SiO_{(4-p-q)/2} (5)

wherein R⁸ represents identical or different, unsubstituted or substituted monovalent hydrocarbon groups containing no aliphatic unsaturated bonds and containing 1 to 10 carbon atoms, and preferably 1 to 8 carbon atoms, and p and q represent positive numbers that preferably satisfy 0.7≤p≤2.1, 0.001≤q≤1.0 and 0.8≤p+q≤3.0, and more preferably satisfy 1.0≤p≤2.0, 0.01≤q≤1.0 and 1.5≤p+q≤2.5.
Examples of R⁸ include the same groups as those described above for R¹ in the average composition formula (1) (but excluding the alkenyl groups).

Specific examples of organohydrogenpolysiloxanes represented by the above average composition formula (3) include 1,1,3,3-tetramethyldisiloxane, 1,3,5,7-tetramethylcyclotetrasiloxane, tris(hydrogendimethylsiloxy)methylsilane, tris(hydrogendimethylsiloxy)phenylsilane, methylhydrogencyclopolysiloxane, cyclic copolymers of methylhydrogensiloxane and dimethylsiloxane, methylhydrogenpolysiloxane with both terminals blocked with trimethylsiloxy groups, copolymers of methylhydrogensiloxane and dimethylsiloxane with both terminals blocked with trimethylsiloxy groups, dimethylpolysiloxane with both terminals blocked with methylhydrogensiloxy groups, copolymers of methylhydrogensiloxane and dimethylsiloxane with both terminals blocked with methylhydrogensiloxy groups, copolymers of methylhydrogensiloxane and diphenylsiloxane with both terminals blocked with trimethylsiloxy groups, copolymers of methylhydrogensiloxane, diphenylsiloxane and dimethylsiloxane with both terminals blocked with trimethylsiloxy groups, copolymers of methylhydrogensiloxane, methylphenylsiloxane and dimethylsiloxane with both terminals blocked with trimethylsiloxy groups, copolymers of methylhydrogensiloxane, diphenylsiloxane and dimethylsiloxane with both terminals blocked with methylhydrogensiloxy groups, copolymers of methylhydrogensiloxane, methylphenylsiloxane and dimethylsiloxane with both terminals blocked with methylhydrogensiloxy groups, copolymers composed of (CH₃)₂HSiO_{1/2} units, (CH₃)₂SiO_{2/2} units and SiO_{4/2} units, copolymers composed of (CH₃)₂HSiO_{1/2} units and SiO_{4/2} units, and copolymers composed of (CH₃)₂HSiO_{1/2} units, SiO_{4/2} units, and (C₆H₅)₃SiO_{1/2} units.

The amount added of the component (g) must be sufficient to provide from 0.1 to 5.0 mols, preferably from 0.5 to 3.0 mols, and more preferably from 0.8 to 2.0 mols, of SiH groups within this component (g) per 1 mol of alkenyl groups within the entire curable silicone composition, and in particular, per 1 mol of alkenyl groups bonded to silicon atoms within the entire curable silicone composition, and especially per 1 mol of alkenyl groups bonded to silicon atoms within the component (f). The proportion of the alkenyl groups bonded to silicon atoms within the component (f) relative to the total number of alkenyl groups that exist within the entire curable silicone composition is preferably within a range from 80 to 100 mol%, and more preferably from 90 to 100 mol%. In those cases where the component (f) is the only component that contains alkenyl groups within the entire curable silicone composition, the amount of SiH groups within the component (g) per 1 mol of alkenyl groups within the component (f) is typically within a range from 0.1 to 5.0 mols, preferably from 0.5 to 3.0 mols, and more preferably from 0.8 to 2.0 mols. If the amount added of the component (g) yields an amount of SiH groups that is less than 0.1 mols, then the time required for curing lengthens, which is economically undesirable. Further, if the amount added yields an amount of SiH groups that exceeds 5.0 mols, then foaming caused by a dehydrogenation reaction tends to occur within the curing reaction product, and the strength and heat resistance of the cured reaction product tend to be adversely affected.

### -- Component (h)

The platinum group metal-based catalyst of the component (h) is used for accelerating the addition curing reaction (the hydrosilylation reaction) between the component (f) and the component (g). Conventional platinum group metal-based catalysts can be used as the component (h), but the use of platinum or a platinum compound is preferred. Specific examples of the component (h) include platinum black, platinic chloride, chloroplatinic acid, alcohol-modified chloroplatinic acid, and complexes of chloroplatinic acid with olefins, aldehydes, vinylsiloxanes or acetylene alcohols.

The amount added of the component (h) need only be an effective catalytic amount, may be suitably increased or decreased in accordance with the desired curing reaction rate, and preferably provides a mass of the platinum group metal relative to the mass of the component (f) that falls within a range from 0.1 to 1,000 ppm, and more preferably from 0.2 to 100 ppm.

### - Condensation-Curable Silicone composition

Specific examples of condensation-curable silicone compositions include compositions comprising:
(i) an organopolysiloxane containing at least two silanol groups (namely, silicon atom-bonded hydroxyl groups) or silicon atom-bonded hydrolyzable groups, preferably at both molecular chain terminals,
(j) as an optional component, a hydrolyzable silane and/or a partial hydrolysis-condensation product thereof, and
(k) as another optional component, a condensation reaction catalyst.

### -- Component (i)

The component (i) is an organopolysiloxane that contains at least two silanol groups or silicon atom-bonded hydrolyzable groups, and functions as the base polymer of the condensation-curable silicone composition. From the viewpoint of ease of availability of the raw material, the organopolysiloxane of the component (i) is preferably basically either a linear structure with no branching, in which the molecular chain (the main chain) is composed of repeating diorganosiloxane units (R⁹₂SiO_{2/2} units), and both molecular chain terminals are blocked with triorganosiloxy groups (R⁹₃SiO_{1/2}), or a cyclic structure with no branching in which the molecular chain is composed of repeating diorganosiloxane units, although the structure may partially include some branched structures. In the above description, R⁹ represents an unsubstituted or substituted monovalent hydrocarbon group of 1 to 10 carbon atoms, and preferably 1 to 8 carbon atoms.

In the organopolysiloxane of the component (i), examples of the hydrolyzable groups other than silanol groups include acyloxy groups such as an acetoxy group, octanoyloxy group and benzoyloxy group; ketoxime groups (namely, iminoxy groups) such as a dimethyl ketoxime group, methyl ethyl ketoxime group and diethyl ketoxime group; alkoxy groups such as a methoxy group, ethoxy group and propoxy group; alkoxyalkoxy groups such as a methoxyethoxy group, ethoxyethoxy group and methoxypropoxy group; alkenyloxy groups such as a vinyloxy group, isopropenyloxy group and 1-ethyl-2-methylvinyloxy group; amino groups such as a dimethylamino group, diethylamino group, butylamino group and cyclohexylamino group; aminoxy groups such as a dimethylaminoxy group and diethylaminoxy group; and amide groups such as an N-methylacetamide group, N-ethylacetamide group and N-methylbenzamide group.

These hydrolyzable groups are preferably positioned at both molecular chain terminals of a linear diorganopolysiloxane, preferably in the form of either siloxy groups that contain two or three hydrolyzable groups, or siloxyalkyl groups that contain two or three hydrolyzable groups, including trialkoxysiloxy groups, dialkoxyorganosiloxy groups, triacyloxysiloxy groups, diacyloxyorganosiloxy groups, triiminoxysiloxy groups (namely, triketoximesiloxy groups), diiminoxyorganosiloxy groups, trialkenoxysiloxy groups, dialkenoxyorganosiloxy groups, trialkoxysiloxyethyl groups and dialkoxyorganosiloxyethyl groups.

Examples of the other monovalent hydrocarbon groups bonded to silicon atoms include the same unsubstituted and substituted monovalent hydrocarbon groups as those described above for R¹ in the average composition formula (1).

Specific examples of the component (i) include the compounds shown below.

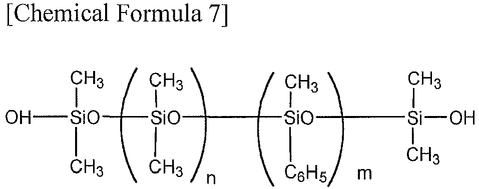

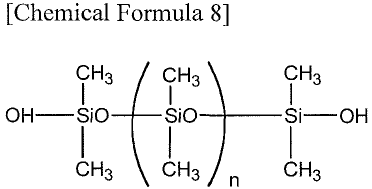

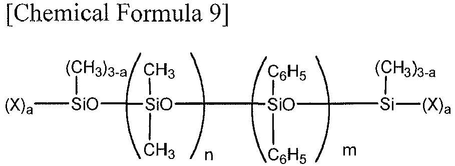

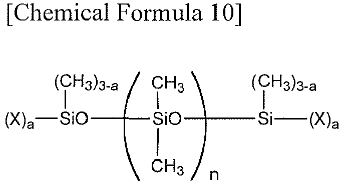

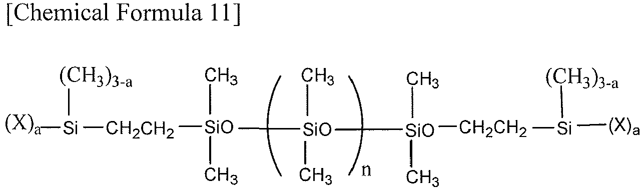

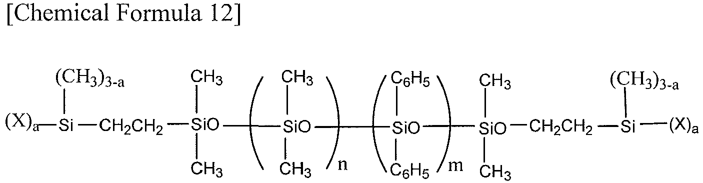

In the above formulas, X represents a hydrolyzable group other than a silanol group, a represents 1, 2 or 3, and each of n and m represents an integer of 1 to 1,000.

Specific examples of the component (i) include dimethylpolysiloxane with both molecular chain terminals blocked with silanol groups, copolymers of dimethylsiloxane and methylphenylsiloxane with both molecular chain terminals blocked with silanol groups, copolymers of dimethylsiloxane and diphenylpolysiloxane with both molecular chain terminals blocked with silanol groups, dimethylpolysiloxane with both molecular chain terminals blocked with trimethoxysiloxy groups, copolymers of dimethylsiloxane and methylphenylsiloxane with both molecular chain terminals blocked with trimethoxysiloxy groups, copolymers of dimethylsiloxane and diphenypolylsiloxane with both molecular chain terminals blocked with trimethoxysiloxy groups, and dimethylpolysiloxane with both molecular chain terminals blocked with 2-trimethoxysiloxyethyl groups. Any one of these compounds may be used alone, or two or more different compounds may be used in combination.

### -- Component (j)

The hydrolyzable silane and/or partial hydrolysis-condensation product thereof of the component (j) is an optional component, and functions as a curing agent. In those cases where the base polymer of the component (i) is an organopolysiloxane that contains at least two silicon atom-bonded hydrolyzable groups other than silanol groups within each molecule, the addition of the component (j) to the condensation-curable silicone composition can be omitted. Silanes containing at least three silicon atom-bonded hydrolyzable groups within each molecule and/or partial hydrolysis-condensation products thereof (namely, organopolysiloxanes that still retain at least one, and preferably two or more of the hydrolyzable groups) can be used particularly favorably as the component (j).

Examples of compounds that can be used favorably as the above silane include compounds represented by a formula (6) shown below:

R¹⁰ᵣSiX₄₋ᵣ (6)

wherein R¹⁰ represents an unsubstituted or substituted monovalent hydrocarbon group of 1 to 10 carbon atoms, and preferably 1 to 8 carbon atoms, X represents a hydrolyzable group, and r represents either 0 or 1. Examples of preferred groups for R¹⁰ include alkyl groups such as a methyl group, ethyl group, propyl group, butyl group, pentyl group and hexyl group; aryl groups such as a phenyl group and tolyl group; and alkenyl groups such as a vinyl group and allyl group.

Specific examples of the component (j) include methyltriethoxysilane, vinyltriethoxysilane, vinyltriacetoxysilane, ethyl orthosilicate, and partial hydrolysis-condensation products of these compounds. Any one of these compounds may be used alone, or two or more different compounds may be used in combination.

In those cases where a hydrolyzable silane and/or partial hydrolysis-condensation product thereof is used as the component (j), the amount added of the component (j) is preferably within a range from 0.01 to 20 parts by mass, and more preferably from 0.1 to 10 parts by mass, per 100 parts by mass of the component (i). In those cases where the component (j) is used, using an amount that satisfies the above range ensures that the composition of the present invention exhibits particularly superior storage stability and curing reaction rate.

### -- Component (k)

The condensation reaction catalyst of the component (k) is an optional component, and need not be used in cases where the above hydrolyzable silane and/or partial hydrolysis-condensation product thereof of the component (j) contains aminoxy groups, amino groups or ketoxime groups or the like. Examples of the condensation reaction catalyst of the component (k) include organotitanate esters such as tetrabutyl titanate and tetraisopropyl titanate; organotitanium chelate compounds such as diisopropoxybis(acetylacetonato)titanium and diisopropoxybis(ethylacetoacetate)titanium; organoaluminum compounds such as aluminum tris(acetylacetonate) and aluminum tris(ethylacetoacetate); organozirconium compounds such as zirconium tetra(acetylacetonate) and zirconium tetrabutyrate; organotin compounds such as dibutyltin dioctoate, dibutyltin dilaurate and dibutyltin di(2-ethylhexanoate); metal salts of organic carboxylic acids such as tin naphthenate, tin oleate, tin butyrate, cobalt naphthenate and zinc stearate; ammonia; amine compounds or the salts thereof such as hexylamine and dodecylamine phosphate; quaternary ammonium salts such as benzyltriethylammonium acetate; lower fatty acid salts of alkali metals such as potassium acetate and lithium nitrate; dialkylhydroxylamines such as dimethylhydroxylamine and diethylhydroxylamine; and guanidyl group-containing organosilicon compounds. Any one of these catalysts may be used alone, or two or more different catalysts may be used in combination.

In those cases where a condensation reaction catalyst of the component (k) is used, there are no particular limitations on the amount added, but the amount is preferably within a range from 0.01 to 20 parts by mass, and more preferably from 0.1 to 10 parts by mass, per 100 parts by mass of the component (i). If the component (k) is used, then provided the amount satisfies the above range, the composition is economically viable from the viewpoints of the curing time and curing temperature.

A conventional method can be used for molding and curing the curable silicone composition in a spherical shape. Examples of methods that have been proposed include a method in which a curable organopolysiloxane is heat cured in an atomized state (see JP 59-68333 A), a method in which a curable organopolysiloxane is emulsified within water using a homomixer, homogenizer, microfluidizer or colloid mill, and is subsequently cured (see JP 56-36546 A, JP 62-243621 A, JP 62-257939 A, JP 63-77942 A, JP 63-202658 A, JP 01-306471 A, JP 03-93834 A, JP 03-95268 A, JP 11-293111 A, JP 2001-2786 A and JP 2001-113147 A), and a method in which a curable organopolysiloxane is injected into water through a nozzle, and is subsequently cured within the water (see JP 61-223032 A, JP 01-178523 A and JP 02-6109 A).

In those cases where a method that utilizes the type of emulsification described above is selected, there are no particular limitations on the emulsifier that is used, and examples include polyoxyethylene alkyl ethers, polyoxyethylene polyoxypropylene alkyl ethers, polyoxyethylene alkyl phenyl ethers, and polyethylene glycol fatty acid esters.

### - Conversion of Spherical Cured Silicone Powder to Spherical Silicon Carbide Powder

The spherical cured silicone powder described above is then subjected to a heat treatment at a higher temperature under a non-oxidizing atmosphere, thereby thermally decomposing the cured silicone powder to form a spherical silicon carbide powder.

This heat treatment is performed under a non-oxidizing atmosphere, and preferably under an inert gas atmosphere. Examples of the inert gas include nitrogen gas, argon gas and helium gas, and argon gas is particularly desirable in terms of obtaining a high-purity silicon carbide.

The heat treatment is performed, for example inside a carbon furnace, at a temperature within a range from 1,500 to 2,300°C. The heat treatment is preferably performed in two stages. In the first stage, a mineralization heat treatment is preferably performed at a temperature within a range from 400 to 1,500°C. The second stage is performed in a carbon furnace, at a temperature within a range exceeding 1,500°C but not more than 2,300°C. The temperature of this heating is preferably 1,600°C or higher. Further, the heating temperature is preferably not more than 2,200°C. As a result of this heat treatment, silicon monoxide and carbon monoxide start to be eliminated from the silicone resin that represents the base polymer, resulting in the formation of a silicon carbide ceramic sintered compact. If the temperature exceeds 2,200°C, then decomposition of the carbon furnace material is severe. As a result of this heat treatment, silicon monoxide and carbon monoxide start to be eliminated from the spherical cured silicone powder, yielding a spherical silicon carbide powder.

The average particle size of the spherical silicon carbide powder particles obtained in this manner is preferably within a range from 0.1 to 100 µm, and more preferably from 0.5 to 20 µm, as such a size is more effective in densifying a silicon carbide sintered compact when added to a curable silicone composition. If this average particle size is too small, then scattering of the powder dust becomes problematic, making handling difficult, whereas if the average particle size is too large, then the specific gravity becomes too large relative to the specific surface area, which can cause problems such as precipitation when the spherical silicon carbide powder is used for mixing in a subsequent step.

### - Method of Preparing Spherical Silicon Carbide Powder-Containing Curable Silicone Composition

In order to prepare a curable silicone composition containing the spherical silicon carbide powder obtained in the manner described above, the spherical silicon carbide powder may, for example, be added to a base curable silicone composition and then mixed using a planetary mixer or the like. Examples of the curable silicone composition that can be used as the base composition include the same compositions as those described above in relation to production of the silicon carbide powder.

The amount of the spherical silicon carbide within the curable silicone composition containing the spherical silicon carbide powder is preferably within a range from 10 to 95% by volume, more preferably from 40 to 90% by volume, and still more preferably from 50 to 80% by volume.

### - Method of Producing Silicon Carbide Ceramic Molded Product

The curable silicone composition containing the spherical silicon carbide powder is molded into a desired shape, subsequently cured to form a silicone cured molded product, and then subjected to a heat treatment at high temperature under a non-oxidizing atmosphere, thereby thermally decomposing the cured silicone portion to obtain a silicon carbide ceramic sintered compact of the desired shape.

The methods used for molding and curing the curable silicone composition may be selected from methods that are known to those skilled in the field for each of the various curing reaction types. The particularly representative and preferred methods of press molding, extrusion molding and injection molding are described below.

### [Press Molding]

By using the curable silicone composition to fill a molding die, and subsequently sandwiching the die between hot plates and curing the composition while applying pressure, a silicone cured product having a desired shape can be obtained. Press molding is ideal for preparing complex shapes. Following pressing at a molding temperature within a range from 100 to 250°C for a period of 1 to 30 minutes, the pressure is released. The applied pressure is preferably within a range from 10 to 200 kgf/cm². Further, if necessary, secondary curing may be performed at a temperature within a range from 100 to 250°C for a period of 1 to 10 hours.

### [Extrusion Molding]

By extruding the curable silicone composition continuously from the die of an extrusion molding apparatus by rotating the screw inside the cylinder of the apparatus, and then passing the extruded composition through a hollow, electrically heated hot-air oven having a length of 1 to 2 m that is positioned close to the die exit, a silicone cured product having a desired shape can be obtained. Extrusion molding is ideal for molding continuous long rod-shaped, pipe-shaped or belt-shaped objects such as tubes or the like. The heating temperature within the electrically heated hot-air oven is typically within a range from 80 to 500°C, and particularly from 100 to 250°C, and the heating time is preferably within a range from 1 to 30 minutes. Further, if necessary, secondary curing may be performed at a temperature within a range from 100 to 250°C for a period of 1 to 10 hours.

### [Injection Molding]

By injecting the curable silicone composition into a heated molding die, a silicone cured product of a desired shape can be obtained. Injection molding enables shapes to be produced with good freedom, and is suitable for both small production runs and mass production. The heating temperature of the molding die is typically within a range from 80 to 500°C, and particularly from 100 to 250°C, and the heating time is preferably within a range from 1 to 30 minutes. Further, if necessary, secondary curing may be performed at a temperature within a range from 100 to 250°C for a period of 1 to 10 hours.

Next, the obtained silicone cured molded product is subjected to a heat treatment within a non-oxidizing atmosphere. The non-oxidizing atmosphere used at this point is the same as that described above, and is preferably an inert gas atmosphere. Examples of the inert gas include nitrogen gas, argon gas and helium gas, and argon gas is particularly desirable.

The heat treatment is preferably performed in two stages. In the first stage, a mineralization heat treatment is preferably performed at a temperature within a range from 400 to 1,500°C. The second stage is performed in a carbon furnace, at a temperature within a range from 1,500°C to 2,300°C. The temperature of this heating is preferably 1,600°C or higher. Further, the heating temperature is preferably not more than 2,200°C. As a result of this heat treatment, silicon monoxide and carbon monoxide start to be eliminated from the silicone resin that represents the base polymer, resulting in the formation of a silicon carbide ceramic sintered compact. If the temperature exceeds 2,200°C, then decomposition of the carbon furnace material is severe.

### Examples

A more detailed description of the present invention is presented below based on a series of examples, although the present invention is in no way limited by these examples.

### [Example 1]

### (Production of Silicon Carbide Powder)

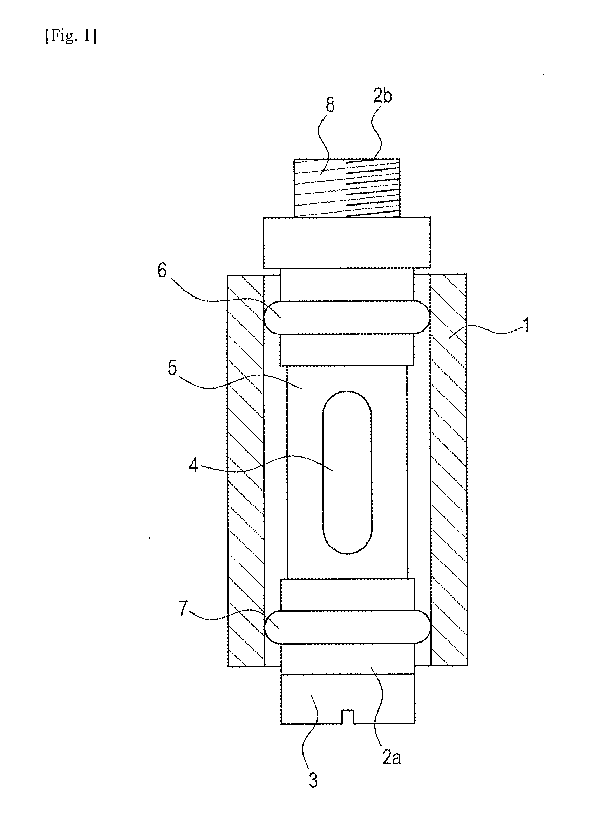

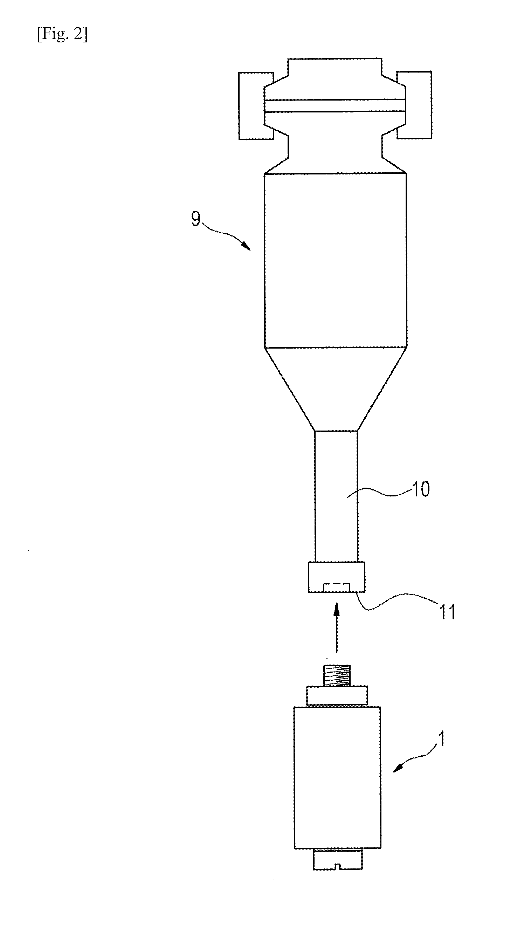

A circular cylindrical porous glass film having a diameter of 10 mm, a length of 10 mm, and interconnected pores with an average pore size of 2.1 µm (product name: SPG film, manufactured by SPG Technology Co., Ltd.) 1 was attached to the outside of a metal pipe 5. As illustrated in Fig. 1, one end 2a of the metal pipe 5 was sealed with a fixed lid 3, and a hole 4 was formed in the side of the metal pipe 5. The circular cylindrical porous glass film 1 was fitted via O-rings 6 and 7 provided around the side surface of the metal pipe 5. Next, as illustrated in Fig. 2, the other end (open end) 2b of the metal pipe 5 was attached, via a screw 8, to the bottom end 11 of a lower tube-like portion (shaft) 10 of a siloxane container 9.

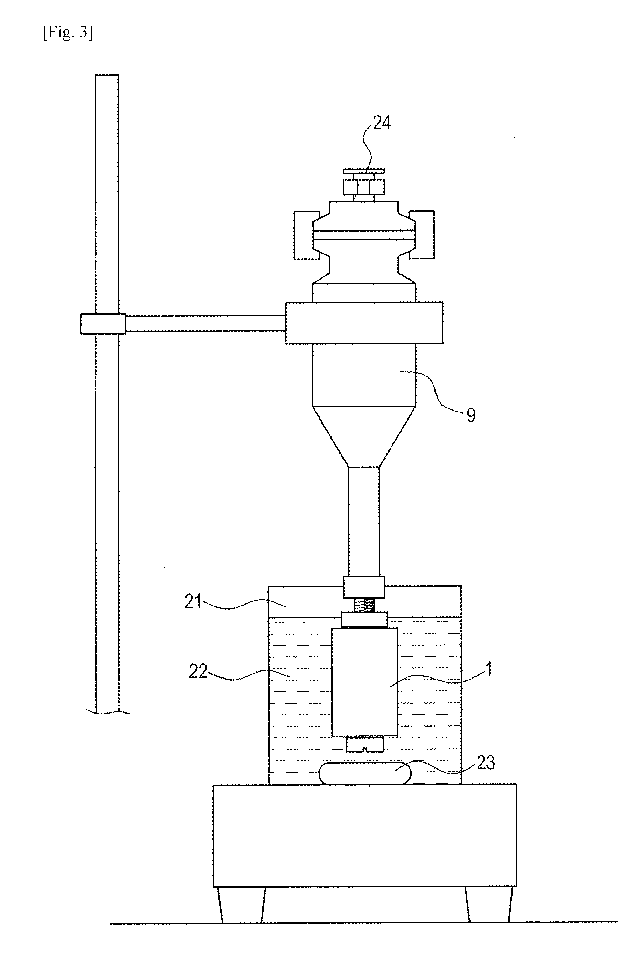

The SPG film portion of the thus assembled structure was immersed in ion-exchanged water, and the water was irradiated with ultrasound for 30 seconds to cause the water to permeate into the pores of the SPG film. Meanwhile, a polysiloxane mixture composed of 15 g of a methylvinylpolysiloxane represented by a formula (7) shown below and 5 g of a methylhydrogenpolysiloxane represented by a formula (8) below was placed in the siloxane container 9. As illustrated in Fig. 3, a 200 ml beaker 21 was charged with 84 g of a 0.6% by mass aqueous solution of polyoxyethylene decyl ether (HLB=13.2) 22. The SPG film portion of the above SPG film/shaft/siloxane container assembly was immersed in the polyoxyethylene decyl ether aqueous solution 22, and then, while the polyoxyethylene decyl ether aqueous solution was stirred using a magnetic stirrer 23, a pressure of 45 kPa was applied using a high-pressure nitrogen gas introduced from a gas inlet port 24 at the top of the siloxane container, thus forcing the polysiloxane mixture through the SPG film and into the polyoxyethylene decyl ether aqueous solution 22. As soon as the pressure was applied, the polyoxyethylene decyl ether aqueous solution started to become cloudy, and after 5 hours 50 minutes, the polysiloxane mixture within the siloxane container had disappeared. At this point, the SPG film was lifted out of the beaker. The thus obtained aqueous dispersion of the polysiloxane mixture was uniform. To this obtained aqueous dispersion of the polysiloxane mixture was added a mixture of 0.04 g of a toluene solution of a chloroplatinic acid-olefin complex (chloroplatinic acid content: 0.05% by mass) and 0.04 g of polyoxyethylene lauryl ether, and after stirring for a further 24 hours, the reaction mixture was filtered through a 60-mesh wire gauze, yielding an aqueous dispersion of a silicone cured product.

Measurement of the particle size of the silicone cured product particles within the dispersion using a particle size measurement device Multisizer II (manufactured by Beckman Coulter, Inc.) revealed a volume average particle size of 8.0 µm. When the aqueous dispersion of the silicone cured product particles was subjected to a solid-liquid separation using a filter paper, and the solid fraction was dried at 105°C in a dryer, a white powder was obtained. Inspection of the white powder under an optical microscope revealed that the particles were spherical.

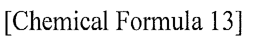

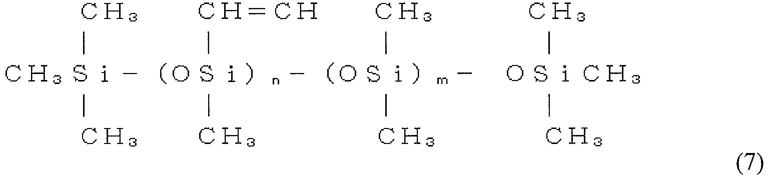

In the formula, n and m are numbers such that n/m = 4/1 and the viscosity of the siloxane at 25°C is 600 mPa·s.

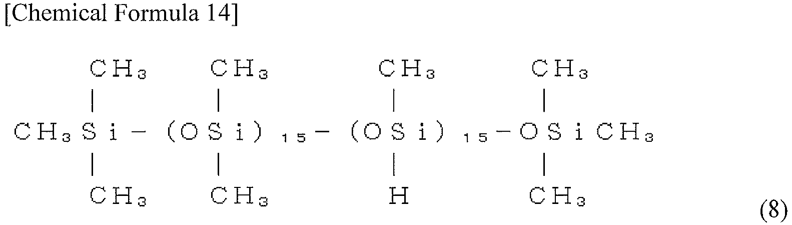

The spherical cured silicone powder was placed in an alumina boat and heated inside an atmosphere furnace under a nitrogen gas atmosphere by raising the temperature from room temperature to 1,000°C at a rate of temperature increase of 100°C/hour over a period of approximately 10 hours, and was then held at 1,000°C for a further one hour. Subsequently, the powder was cooled to room temperature at a rate of 200°C/hour. This process yielded a black powder. Inspection of this powder using an electron microscope revealed that the particles were spherical, and the volume average particle size was 8.0 µm.

The black spherical powder was placed in a carbon container, and in a carbon atmosphere furnace, under an argon gas atmosphere, the temperature was raised to 2,000°C over a 20-hour period at a rate of temperature increase of 100°C/hour. The temperature was then held at 2,000°C for two hours, and then cooled to room temperature at a rate of 200°C/hour. This yielded a green powder. Inspection of this powder using an electron microscope revealed that the particles were spherical, and the volume average particle size was 6.5 µm.

### - Measurement of Elemental Ratio

When an oxygen analysis of the obtained green powder was performed using an oxygen analyzer (product name: TC436, manufactured by LECO Corporation), the oxygen content was not more than 0.2% by mass. The elemental ratio was Si₁C₁₀₀.

### - Analysis of Impurity Elements

When the obtained green powder was analyzed by ICP emission analysis, the results shown in Table 1 were obtained for the various element content values. A result of "<0.1" indicates that the result was less than the detection limit of 0.1 ppm.

**[Table 1]**

| Analyzed element | Measured value (ppm) |
|---|---|
| Fe | <0.1 |
| Cr | <0.1 |
| Ni | <0.1 |
| Al | <0.1 |
| Ti | 0.1 |
| Cu | <0.1 |
| Na | 0.1 |
| Zn | <0.1 |
| Ca | 0.1 |
| Zr | <0.1 |
| Mg | <0.1 |
| B | <0.1 |

These results revealed that many of the impurity elements, including nickel, chromium, iron and aluminum, which are impurity elements that typically cause problems in the field of semiconductor devices, were less than the detection limit.

### [Example 2]

### (Production of Silicon Carbide Powder)

A 5-liter glass container was charged with 3,510 g of ion-exchanged water having a pH of 7, and following lowering of the water temperature to 3°C, 1.8 g of trimethylsiloxymethoxysilane and 180 g of methyltrimethoxysilane were added to the container and stirred for one hour. 90 g of an aqueous solution of ammonia (concentration: 28% by mass) was then added to the container, and the resulting mixture was stirred for 10 minutes with the liquid temperature maintained at 3 to 7°C. Subsequently, 540 g of methyltrimethoxysilane was added to the reaction mixture over a period of 2.5 hours with the liquid temperature maintained at 5 to 10°C, and following completion of the addition, the mixture was stirred for a further one hour with the liquid temperature maintained at 5 to 10°C. The reaction mixture was then heated to 75 to 80°C, and stirred for a further one hour at that temperature. The reaction mixture was then cooled to room temperature, a solid-liquid separation was performed using filter paper, and the obtained solid fraction was dried at 105°C using a dryer. When the thus obtained dried product was crushed using a jet mill, a white powder was obtained. Inspection of this white powder under an optical microscope revealed that the particles were spherical, and the volume average particle size was 0.7 µm.

The spherical cured silicone powder was placed in an alumina boat and heated inside an atmosphere furnace under a nitrogen gas atmosphere by raising the temperature from room temperature to 1,000°C at a rate of temperature increase of 100°C/hour over a period of approximately 10 hours, and was then held at 1,000°C for a further one hour. Subsequently, the powder was cooled to room temperature at a rate of 200°C/hour. This process yielded a black powder. Inspection of this powder using an electron microscope revealed that the particles were spherical, and the volume average particle size was 0.7 µm.

The black spherical powder was placed in a carbon container, and in a carbon atmosphere furnace, under an argon gas atmosphere, the temperature was raised to 2,000°C over a 20-hour period at a rate of temperature increase of 100°C/hour. The temperature was then held at 2,000°C for two hours, and then cooled to room temperature at a rate of 200°C/hour. This yielded a green powder. Inspection of this powder using an electron microscope revealed that the particles were spherical, and the volume average particle size was 0.5 µm.

### - Measurement of Elemental Ratio

When a carbon analysis of this green powder was performed, the carbon content was 30.3% by mass. Further, when an oxygen analysis was performed using an oxygen analyzer (product name: TC436, manufactured by LECO Corporation), the oxygen content was not more than 0.2% by mass. The elemental ratio was Si₁C₁₀₂.

### - Analysis of Impurity Elements

An elemental analysis sample was prepared in the same manner as that described in the example 1, and when the sample was analyzed by ICP emission analysis, the results shown in Table 2 were obtained. A result of "<0.1" indicates that the result was less than the detection limit of 0.1 ppm.

**[Table 2]**

| Analyzed element | Measured value (ppm) |
|---|---|
| Fe | <0.1 |
| Cr | <0.1 |
| Ni | <0.1 |
| Al | <0.1 |
| Ti | 0.1 |
| Cu | <0.1 |
| Na | 0.1 |
| Zn | <0.1 |
| Ca | 0.1 |
| Zr | <0.1 |
| Mg | <0.1 |
| B | <0.1 |

These results revealed that many of the impurity elements, including nickel, chromium, iron and aluminum, which are impurity elements that typically cause problems in the field of semiconductor devices, were less than the detection limit.

### [Example 3]

### (Production of Silicon Carbide Molded Product)

(A) 100 parts by mass of the methylvinylpolysiloxane represented by the above formula (7),
(B) 0.7 parts by mass of benzoyl peroxide relative to the total mass of polysiloxanes,
(C) 33 parts by mass of the methylhydrogenpolysiloxane represented by the above formula (8) and
(D) 792 parts of the spherical cured silicone powder obtained in the example 1 (namely, an amount equivalent to 65% by volume of the entire silicone composition)

The above components (A) to (D) were placed in a planetary mixer (a registered trademark, a mixer manufactured by Inoue Manufacturing Co., Ltd.) and mixed for one hour at room temperature, yielding a curable silicone composition that was clay-like at room temperature. This curable silicone composition was subjected to press curing for 5 minutes under a pressure of 100 kgf/cm² and at a temperature of 150°C, yielding a sheet-like silicone cured molded item having dimensions of length: 40 mm × width: 40 mm × thickness: 2 mm.

This silicone cured molded item was placed in an alumina boat and heated inside an atmosphere furnace under a nitrogen gas atmosphere by raising the temperature from room temperature to 1,000°C at a rate of temperature increase of 100°C/hour over a period of approximately 10 hours, and was then held at 1,000°C for a further one hour. Subsequently, the molded item was cooled to room temperature at a rate of 200°C/hour. This process yielded a black molded item formed from inorganic material. The dimensions of this inorganic molded item were length: 39.2 mm × width: 39.2 mm × thickness: 2 mm.

Next, this black inorganic molded item was placed in a carbon container, and in a carbon atmosphere furnace, under an argon gas atmosphere, the temperature was raised to 2,000°C over a 20-hour period at a rate of temperature increase of 100°C/hour. The temperature was then held at 2,000°C for two hours, and then cooled to room temperature at a rate of 200°C/hour. This yielded a green silicon carbide molded item. The dimensions of this silicon carbide molded item were length: 39.0 mm × width: 39.0 mm × thickness: 2 mm, and the shape was substantially identical with that of the aforementioned silicone cured molded item.

### - Measurement of Elemental Ratio

When a portion was cut from the surface of this green molded item and subjected to carbon analysis, the carbon content was 30.3% by mass. Further, when an oxygen analysis was performed using an oxygen analyzer (product name: TC436, manufactured by LECO Corporation), the oxygen content was not more than 0.2% by mass. The elemental ratio was Si₁C₁.₀₂.

### - Analysis of Impurity Elements

An elemental analysis sample was prepared in the same manner as that described in the example 1, and when the sample was analyzed by ICP emission analysis, the results shown in Table 3 were obtained. A result of "<0.1" indicates that the result was less than the detection limit of 0.1 ppm.

**[Table 3]**

| Analyzed element | Measured value (ppm) |
|---|---|
| Fe | <0.1 |
| Cr | <0.1 |
| Ni | <0.1 |
| Al | <0.1 |
| Ti | 0.1 |
| Cu | <0.1 |
| Na | 0.1 |
| Zn | <0.1 |
| Ca | 0.1 |
| Zr | <0.1 |
| Mg | <0.1 |
| B | <0.1 |

These results revealed that many of the impurity elements, including nickel, chromium, iron and aluminum, which are impurity elements that typically cause problems in the field of semiconductor devices, were less than the detection limit.

### [Comparative Example]

With the exception of replacing the 792 parts by mass of the spherical silicon carbide powder used as the component (D) in the example 3 with 792 parts by mass of a product GP#1000 (an amorphous silicon carbide powder) manufactured by Shinano Electric Refining Co., Ltd., the components were mixed for one hour at room temperature in a planetary mixer (a registered trademark, a mixer manufactured by Inoue Manufacturing Co., Ltd.) in the same manner as the example 3, but a clay-like silicone composition was not obtained, and the mixture remained a powder.

### Industrial Applicability

A spherical silicon carbide powder of the present invention is useful for producing a dense silicon carbide molded product. This silicon carbide molded product is useful, for example, in the field of semiconductor device production, for boards and process tubes and the like that are used within steps for conducting heat treatments of semiconductor wafers, or conducting thermal diffusion of trace elements within semiconductor wafers.

## Claims

1. A spherical silicon carbide powder, obtained by thermally decomposing a spherical cured silicone powder under a non-oxidizing atmosphere.

2. A method of producing a spherical silicon carbide powder, the method comprising thermally decomposing a spherical cured silicone powder under a non-oxidizing atmosphere.

3. The method according to claim 2, wherein thermal decomposition is performed at a temperature within a range exceeding 1,500°C but not more than 2,300°C.

4. The method of producing a spherical silicon carbide powder according to claim 3, wherein the method includes a stage, performed prior to the thermal decomposition, of heating and performing an inorganic ceramization of the spherical cured silicone powder under a non-oxidizing atmosphere at a temperature within a range from 400°C to 1,500°C.

5. The method according to claim 4, wherein the thermal decomposition is performed by heating an obtained spherical inorganic ceramic powder at a temperature within a range exceeding 1,500°C but not more than 2,300°C, thereby converting the spherical inorganic ceramic powder to a silicon carbide.

6. The method according to claim 2, wherein the spherical cured silicone powder is obtained by molding a curable silicone composition into a spherical shape and then performing curing.

7. The method according to claim 2, wherein the curable silicone composition is an organic peroxide-curable silicone composition.

8. The method according to claim 7, wherein the organic peroxide-curable silicone composition is a composition comprising:
(a) an organopolysiloxane containing at least two alkenyl groups bonded to silicon atoms,
(b) an organic peroxide, and
(c) as an optional component, an organohydrogenpolysiloxane containing at least two hydrogen atoms bonded to silicon atoms, in an amount that provides 0.1 to 2 mols of hydrogen atoms bonded to silicon atoms within the component (c) per 1 mol of alkenyl groups within the entire curable silicone composition.

9. The method according to claim 2, wherein the curable silicone composition is a radiation-curable silicone composition.

10. The method according to claim 6, wherein the radiation-curable silicone composition is an ultraviolet light-curable silicone composition comprising:
(d) an ultraviolet light-reactive organopolysiloxane, and
(e) a photopolymerization initiator.

11. The method according to claim 9, wherein the ultraviolet light-reactive organopolysiloxane of the component (d) is an organopolysiloxane having at least two ultraviolet light-reactive groups, represented by a general formula (3a) shown below: 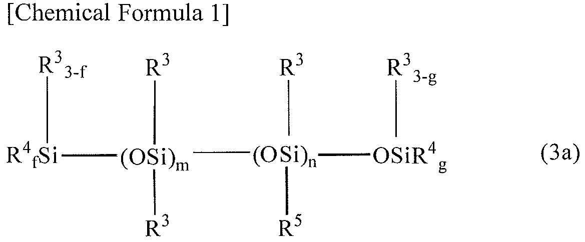 wherein R³ represents identical or different, unsubstituted or substituted monovalent hydrocarbon groups that do not have an ultraviolet light-reactive group, R⁴ represents identical or different groups having an ultraviolet light-reactive group, R⁵ represents identical or different groups having an ultraviolet light-reactive group, m represents an integer of 5 to 1,000, n represents an integer of 0 to 100, f represents an integer of 0 to 3, and g represents an integer of 0 to 3, provided that f+g+n≥2.

12. The method according to claim 8, wherein each of the ultraviolet light-reactive groups is an alkenyl group, alkenyloxy group, acryloyl group, methacryloyl group, mercapto group, epoxy group or hydrosilyl group.

13. The method according to claim 7, wherein the ultraviolet light-reactive organopolysiloxane of the component (d) is an organopolysiloxane having at least two ultraviolet light-reactive groups, represented by a general formula (3b) shown below: 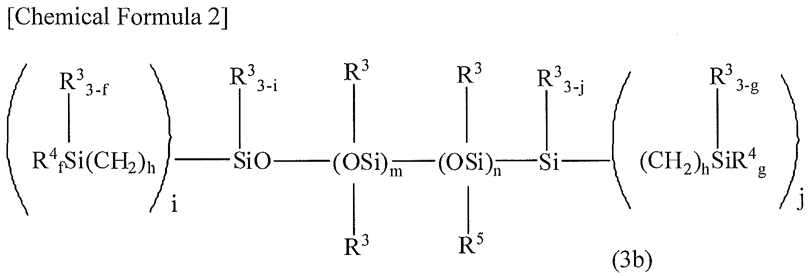 wherein R³ represents identical or different, unsubstituted or substituted monovalent hydrocarbon groups that do not have an ultraviolet light-reactive group, R⁴ represents identical or different groups having an ultraviolet light-reactive group, R⁵ represents identical or different groups having an ultraviolet light-reactive group, m represents an integer of 5 to 1,000, n represents an integer of 0 to 100, f represents an integer of 0 to 3, g represents an integer of 0 to 3, h represents an integer of 2 to 4, and i and j each represents an integer of 1 to 3, provided that fi+gj+n≥2.

14. The method according to claim 10, wherein each of the ultraviolet light-reactive groups is an alkenyl group, alkenyloxy group, acryloyl group, methacryloyl group, mercapto group, epoxy group or hydrosilyl group.

15. The method according to claim 7, wherein the component (e) is included in an amount of 0.01 to 10 parts by mass per 100 parts by mass of the component (d).

16. The method according to claim 6, wherein the curable silicone composition is an addition-curable silicone composition.

17. The method according to claim 13, wherein the addition-curable silicone composition is a composition comprising:
(f) an organopolysiloxane containing at least two alkenyl groups bonded to silicon atoms,
(g) an organohydrogenpolysiloxane containing at least two hydrogen atoms bonded to silicon atoms, in an amount that provides 0.1 to 5 mols of hydrogen atoms bonded to silicon atoms within the component (g) per 1 mol of alkenyl groups within the entire curable silicone composition, and
(h) an effective amount of a platinum group metal-based catalyst.

18. The method according to claim 6, wherein the curable silicone composition is a condensation-curable silicone composition.

19. The method according to claim 15, wherein the condensation-curable silicone composition is a composition comprising:
(i) an organopolysiloxane containing at least two silanol groups or silicon atom-bonded hydrolyzable groups,
(j) as an optional component, a hydrolyzable silane, a partial hydrolysis-condensation product thereof, or a combination thereof, and
(k) as another optional component, a condensation reaction catalyst.

20. A method of producing a silicon carbide molded product, the method comprising:
molding a curable silicone composition comprising the spherical silicon carbide powder defined in claim 1 into a desired shape, and then curing the composition to obtain a silicone cured molded product having a desired shape, and
subsequently thermally decomposing a silicone portion of the silicone cured molded product under a non-oxidizing atmosphere.

21. The method according to claim 20, wherein the curable silicone composition is an organic peroxide-curable silicone composition.

22. The method according to claim 21, wherein the organic peroxide-curable silicone composition is a composition comprising, in addition to the spherical silicon carbide powder:
(a) an organopolysiloxane containing at least two alkenyl groups bonded to silicon atoms,
(b) an organic peroxide, and
(c) as an optional component, an organohydrogenpolysiloxane containing at least two hydrogen atoms bonded to silicon atoms, in an amount that provides 0.1 to 2 mols of hydrogen atoms bonded to silicon atoms within the component (c) per 1 mol of alkenyl groups within the entire curable silicone composition.

23. The method according to claim 20, wherein the curable silicone composition is a radiation-curable silicone composition.

24. The method according to claim 23, wherein the radiation-curable silicone composition is an ultraviolet light-curable silicone composition comprising, in addition to the spherical silicon carbide powder:
(d) an ultraviolet light-reactive organopolysiloxane, and
(e) a photopolymerization initiator.

25. The method according to claim 24, wherein the ultraviolet light-reactive organopolysiloxane of the component (d) is an organopolysiloxane having at least two ultraviolet light-reactive groups, represented by a general formula (3a) shown below: 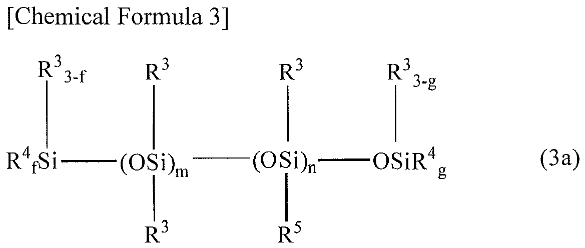 wherein R³ represents identical or different, unsubstituted or substituted monovalent hydrocarbon groups that do not have an ultraviolet light-reactive group, R⁴ represents identical or different groups having an ultraviolet light-reactive group, R⁵ represents identical or different groups having an ultraviolet light-reactive group, m represents an integer of 5 to 1,000, n represents an integer of 0 to 100, f represents an integer of 0 to 3, and g represents an integer of 0 to 3, provided that f+g+n≥2.

26. The method according to claim 8, wherein each of the ultraviolet light-reactive groups is an alkenyl group, alkenyloxy group, acryloyl group, methacryloyl group, mercapto group, epoxy group or hydrosilyl group.

27. The method according to claim 24, wherein the ultraviolet light-reactive organopolysiloxane of the component (d) is an organopolysiloxane having at least two ultraviolet light-reactive groups, represented by a general formula (3b) shown below: 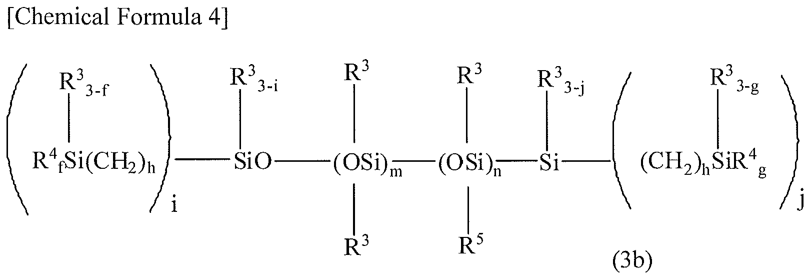 wherein R³ represents identical or different, unsubstituted or substituted monovalent hydrocarbon groups that do not have an ultraviolet light-reactive group, R⁴ represents identical or different groups having an ultraviolet light-reactive group, R⁵ represents identical or different groups having an ultraviolet light-reactive group, m represents an integer of 5 to 1,000, n represents an integer of 0 to 100, f represents an integer of 0 to 3, g represents an integer of 0 to 3, h represents an integer of 2 to 4, and i and j each represents an integer of 1 to 3, provided that fi+gj+n≥2.

28. The method according to claim 27, wherein each of the ultraviolet light-reactive groups is an alkenyl group, alkenyloxy group, acryloyl group, methacryloyl group, mercapto group, epoxy group or hydrosilyl group.

29. The method according to claim 24, wherein the component (e) is included in an amount of 0.01 to 10 parts by mass per 100 parts by mass of the component (d).

30. The method according to claim 20, wherein the curable silicone composition is an addition-curable silicone composition.

31. The method according to claim 30, wherein the addition-curable silicone composition is a composition comprising, in addition to the spherical silicon carbide powder:
(f) an organopolysiloxane containing at least two alkenyl groups bonded to silicon atoms,
(g) an organohydrogenpolysiloxane containing at least two hydrogen atoms bonded to silicon atoms, in an amount that provides 0.1 to 5 mols of hydrogen atoms bonded to silicon atoms within the component (g) per 1 mol of alkenyl groups within the entire curable silicone composition, and
(h) an effective amount of a platinum group metal-based catalyst.

32. The method according to claim 20, wherein the curable silicone composition is a condensation-curable silicone composition.

33. The method according to claim 32, wherein the condensation-curable silicone composition is a composition comprising, in addition to the spherical silicon carbide powder:
(i) an organopolysiloxane containing at least two silanol groups or silicon atom-bonded hydrolyzable groups,
(j) as an optional component, a hydrolyzable silane, a partial hydrolysis-condensation product thereof, or a combination thereof, and
(k) as another optional component, a condensation reaction catalyst.

34. The method according to claim 20, wherein an average particle size of the spherical silicon carbide powder is within a range from 0.1 to 100 µm.

35. The method according to claim 20, wherein an amount of the spherical silicon carbide powder within the curable silicone composition is within a range from 10 to 95% by volume.
